# EUROPÄISCHE PATENTSCHRIFT

(11) **EP 1 201 938 B1**
(45) Veröffentlichungstag und Bekanntmachung des Hinweises auf die Patenterteilung: **06.04.2005**
(21) Anmeldenummer: 01122717.0
(22) Anmeldetag: 21.09.2001
(51) Int. Cl.: F16B 13/06, F16B 9/02, E05B 3/00, F16B 13/02, F16B 13/12

(54) **Dübel mit eindrehbarer Spreizschraube**
Dowel with cooperating expanding screw
Cheville avec vis d'expansion associée

(30) Priorität: 24.10.2000 DE 10052662
(43) Veröffentlichungstag der Anmeldung: 02.05.2002
(73) Patentinhaber: Horst Filipp GmbH, 32130 Enger-Oldinghausen (DE)
(72) Erfinder: Filipp, Horst, 32123 Enger-Oldinghausen (DE)
(74) Vertreter: Dantz, Jan Henning

(56) Entgegenhaltungen:
- DE-A- 3 927 779
- US-A- 4 893 973
- US-A- 5 993 128

## Beschreibung

Die vorliegende Erfindung betrifft einen Dübel mit eindrehbarer Spreizschraube gemäß dem Oberbegriff des Anspruchs 1 (DE 39 27 779 A).

Derartige Dübel finden in vielen Anwendungsbereichen Verwendung.

So ist es beispielsweise bekannt, mittels solcher Dübel Beschläge, beispielsweise Türgriffe oder dergleichen festzulegen. Allerdings ist der Einsatz dieser Dübel relativ eingeschränkt und für viele Bereiche nicht geeignet, so daß hierfür eigene, zum Teil recht aufwendige Konstruktionen erforderlich sind.

Hierzu zählt z. B. die Befestigung von beidseitig an einem Türblatt befestigten Bügelgriffen, hier insbesondere bei Türblättern aus Sicherheitsglas.

Dabei wird ein Bolzen durch die Tür geführt und mit den beiden sich gegenüber liegenden Türgriffen jeweils verstiftet.

Bei anderen Konstruktionen werden an einem Griff seitlich Madenschrauben eingedreht, die in eine umlaufende Nut eines Verbindungsstücks eingreifen, das mit dem Bolzen verbunden und in den Türgriff eingesteckt ist.

Abgesehen von ihrem relativ komplizierten konstruktiven Aufbau, im anderen Fall ihrer eingeschränkten Einsatzmöglichkeit ist allen Verbindungen gemeinsam, daß sie nur in geringem Umfang belastungsfähig sind. Vor allem beim Einsatz in Türgriffen, die üblicherweise einer Zugbeanspruchung unterliegen, kommt es immer wieder zu Lockerungen der Befestigung, mit der Folge einer notwendigen Instandsetzung.

Neben den sich daraus ergebenden Kosten stellt ein lockerer Türgriff auch für den Benutzer ein Ärgernis dar, das dann besonders schwer wiegt, wenn solche Türgriffe im gewerblichen Bereich, beispielsweise bei Ladentüren, eingesetzt werden.

Weiter ist es bekannt, Beschläge an Türen- oder Fensterrahmen beispielsweise durch sogenannter Metall-Spreizdübel zu befestigen, die aus einer Hülse bestehen, in die endseitig mittels einer eingesteckten Schraube ein Konus gezogen wird, wobei sich der geschlitzte Endbereich der Hülse spreizt und so eine Verbindung mit dem angeschlossenen Beschlag herstellt.

Probleme ergeben sich allerdings hinsichtlich eines sicheren Halts vor allem, wie erwähnt, bei starker und dauerhafter Beanspruchung. Da ein Reibschluß und teilweiser Formschluß durch eine rauhe Oberfläche des gespreizten Bereiches nur über eine kurze Strecke, nämlich den der Spreizung durch den eingezogenen Konus, wirksam wird, können überwiegend auftretende Zugkräfte nicht dauerhaft aufgenommen werden.

Verstärkt treten solche Befestigungsprobleme dann auf, wenn als Fenster- oder Türrahmen Hohlkammerprofile eingesetzt werden, wobei die Spreizung lediglich hinter einer Wandung bzw. an der Lochlaibung einer in dieser Wandung vorgesehenen Bohrung für den Dübel wirksam wird.

Hinzu kommt, daß sich beim Einziehen des Konus in die Hülse diese Wandung und/oder die Außenwandung des Rahmens, an der die Hülse mit einem angeformten Kragen anliegt, aufgrund der auftretenden Druckkräfte verbiegen kann, was neben den sich ergebenden Stabilitätseinbußen insbesondere im Sichtbereich der außenseitigen Rahmenwandung zu optischen Beeinträchtigungen führt.

Um diese erkannten Nachteile zu umgehen, ist es bekannt, in dem Hohlkammerprofil Befestigungsmittel zu plazieren, die eine größere Flächenpressung auf die angrenzende Wandung ermöglichen und auf den Einsatz eines Dübels verzichten, und die Verbindung ausschließlich durch Klemmung erzielen. Jedoch sind diese Befestigungeinrichtungen konstruktiv sehr aufwendig und überdies problematisch zu montieren, da sie in das Hohlkammerprofil eingeschoben werden müssen.

Neben der relativ teuren Herstellung solcher Befestigungseinrichtungen sind daher auch die Montage und Demontage sehr aufwendig und kostenintensiv.

Der vorliegenden Erfindung liegt daher die Aufgabe zugrunde, einen Dübel der gattungsgemäßen Art so auszubilden, daß seine Verwendungsfähigkeit verbessert, seine Montage bzw. Demontage vereinfacht und die Befestigung insgesamt sicherer wird.

Diese Aufgabe wird durch einen Dübel gelöst, der die Merkmale des Anspruchs 1 aufweist.

Mit Hilfe eines solchen Dübels ist es nun möglich, eine Vielzahl unterschiedlicher Beschläge zu befestigen. Dabei zeichnet sich der neue Dübel besonders durch seine hohe Belastungsfähigkeit, d.h. seine hohe Sitzfestigkeit in dem Teil aus, mit dem er verbunden ist.

Ein weiterer Vorteil liegt in seinem konstruktiv einfachen Aufbau, der nicht nur eine einfache und kostengünstige Herstellung, sondern auch eine ebensolche Montage ermöglicht.

Überdies ist der Dübel nunmehr für unterschiedlichste Anwendungsgebiete einsetzbar. So können neben den genannten Türbeschlägen auch Fensterbeschläge problemlos befestigt werden, wobei dieser Dübel sowohl in Vollmaterial, wie Holz, Ziegel oder Porenbeton, als auch in Hohlkammerprofile, auch Gitterlochsteine, einsetzbar ist.

Nach einer vorteilhaften Weiterbildung der Erfindung ist vorgesehen, daß die Spreizschraube kürzer ist als die Gesamtlänge des Innengewindes, vorzugsweise gleich lang oder geringfügig kürzer als der Bereich, der einen kleineren Gewindedurchmesser aufweist.

Hierdurch verbleibt ausreichend Platz, um eine Befestigungsschraube in den übrigen Bereich des Innengewindes einzudrehen, dessen Gewindedurchmesser dem der Befestigungsschraube entspricht.

Zweckmäßig ist es, daß die Spreizschraube in ihrem Durchmesser der Befestigungsschraube entspricht. Denkbar ist aber auch, daß die Spreizschraube einen kleineren Gewindedurchmesser aufweist, der dann aber so gewählt sein muß, daß die Spreizschraube problemlos durch den Bereich des Innengewindes geführt werden kann, der einen größeren Durchmesser aufweist.

Prinzipiell denkbar ist auch, daß der Bereich mit dem kleineren Gewindedurchmesser am Grund einer gewindelosen Bohrung anschließt, in die beispielsweise ein Verbindungsstück einsteckbar ist, das in an sich bekannter Weise mit einer umlaufenden Ringnut versehen ist, in die seitlich in einen Griff eines Beschlages eingedrehte Schrauben eingreifen, so daß dieser Griff axial gesichert ist.

Bedingt durch den Durchmesserunterschied zwischen dem Aufnahmebereich für die Spreizschraube einerseits und dieser selbst erfolgt eine Spreizung der durch die Längsschlitze, die sich von der Mantelfläche hin bis in den Innengewinderaum erstrecken, gebildeten Preßbacken und eine recht großflächige Anpressung an die Innenwandung des Teiles, in die der Dübel eingesteckt ist. Dabei wird die Pressung zumindest über den Bereich wirksam, der von der Länge der Spreizschraube definiert wird.

Der Gewindeunterschied hingegen sollte nicht zu groß sein, insbesondere dann, wenn der Dübel in ein dünnwandiges Teil eingeschoben wird, das bei zu starker Spreizung deformiert wird. Allerdings ist diese Spreizung auch bestimmbar durch die Eindrehlänge der Spreizschraube.

Wenn, wie nach einem weiteren Gedanken der Erfindung vorgesehen, der Bereich mit kleinerem Gewindedurchmesser sich weitgehend über die gesamte Länge erstreckt, wird beim Eindrehen der Spreizschraube prinzipiell eine Spreizung über die gesamte Länge erreicht, wobei vorgesehen sein kann, daß ausgehend von den beiden Enden sich Längsschlitze erstrecken, die jeweils versetzt zueinander angeordnet sind, sich in ihrer Lage zueinander jedoch überlappen.

Denkbar ist jedoch auch, daß lediglich ein Längsschlitz vorgesehen ist, der sich über die gesamt Länge erstrecken kann.

Die durchgängige Spreizung des Dübels bewirkt, daß zum einen ein festes Anpressen an die Lochlaibung jeder von dem Dübel durchtretenden Wand erfolgt, die dann besonders wirksam ist, wenn, wie ein weiterer Gedanke der Erfindung vorsieht, der Dübel außen ebenfalls mit einem Gewinde versehen ist, dessen Flanken sich in die Laibung eingraben, so daß ein regelrechter Formschluß entsteht.

Denkbar ist aber auch, statt eines Gewindes die Oberfläche des Dübels in einer anderen Art und Weise zu profilieren, beispielsweise durch Rändelung oder dergleichen.

Neben dem genannten Formschluß im Bereich der Lochlaibungen erfolgt durch die Aufspreizung des Dübels eine Ausbeulung innerhalb der von der den Dübel durchtretenden Hohlkammer bzw. unmittelbar hinter der letzten durchtretenden Wandung.

Durch diese Ausbeulungen, die dazu führen, daß der Durchmesser des Dübels in diesem Bereich größer ist als die Durchsteckbohrungen der Wandungen, wird eine absolut sichere axiale Arretierung des Dübels erreicht, die auch stärksten Belastungen standhält.

Bei Zugversuchen hat sich gezeigt, daß das Hohlkammerprofil zerstört bzw. deformiert wird, nicht jedoch der Dübel aus seiner Verankerung gelöst.

Grundsätzlich ist der erfindungsgemäß ausgebildete Dübel in den unterschiedlichsten Materialien verankerbar. So eignet sich insbesondere auch Holz als Einsatzwerkstoff, wobei sich dann die Flanken des Außengewindes des Dübels tief in das umliegende Material eingraben.

Als besonders vorteilhaft stellt sich die neue Befestigungseinrichtung dann dar, wenn Beschläge ausgetauscht werden sollen. Dabei ist ein problemloses Herausdrehen der Spreizschraube, die andererseits den Beschlag oder ein Beschlagteil trägt, möglich, ohne daß der Dübel selbst in seiner fixierten Position verändert wird. Nachfolgend kann die Spreizschraube zusammen mit einem neuen Beschlag wieder eingedreht werden.

Um das Einführen bzw. Einschrauben der Spreizschraube zu erleichtern, entspricht der Einsteckdurchmesser des Bereiches mit kleinerem Gewinde dem Durchmesser der Spreizschraube, so daß diese beim Eindrehen problemlos greifen kann. Erst danach verjüngt sich der Durchmesser des Bereiches im vorbestimmten Umfang.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen erfindungsgemäßen Dübel in Funktion zur Verbindung zweier Griffbügel an einem Türblatt in einem teilweise geschnittenen Querschnitt,
- Figur 2: einen der beiden in dem Beispiel nach Figur 1 eingesetzten Dübel in einem Halbschnitt,
- Figur 3: den zweiten Dübel nach Figur 1 in einem Längsschnitt,
- Figur 4: eine Draufsicht auf den Dübel in Figur 3.
- Figur 5: ein weiteres Ausführungsbeispiel eines erfindungsgemäßen Dübels in einer halbgeschnittenen Seitenansicht,
- Figur 6: den Dübel nach Figur 5 in einer Draufsicht,
- Figur 7: den Dübel in einer geschnittenen Explosivdarstellung in Seitenansicht,
- Figur 8: den montierten Dübel gleichfalls in einer geschnittenen Seitenansicht.

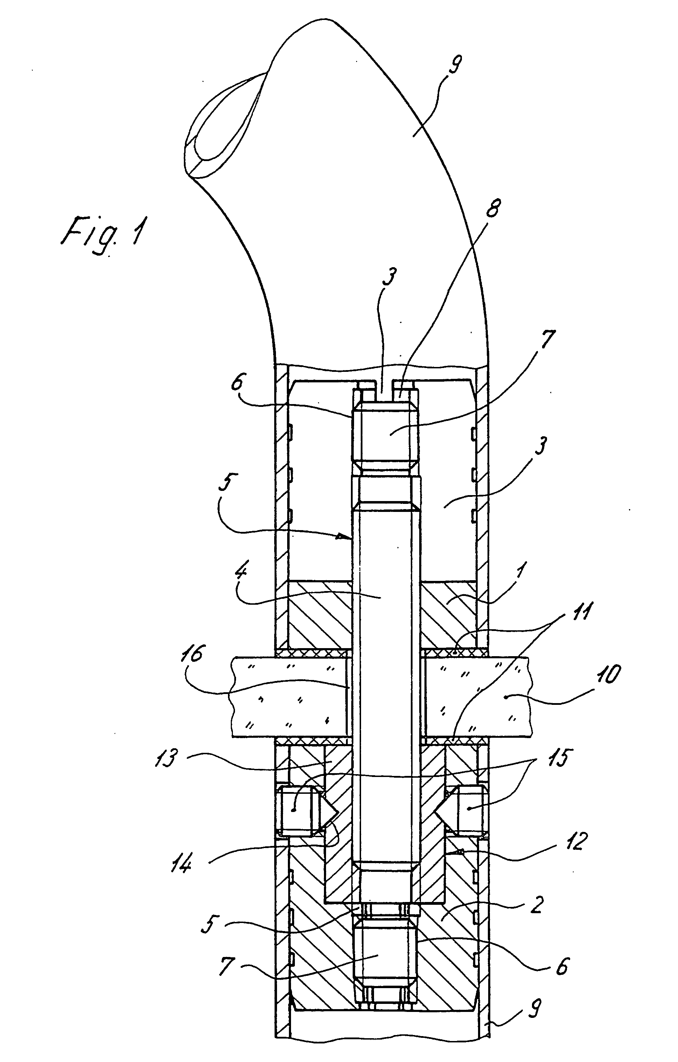

In der Figur 1 sind zwei Griffbügel 9 an einem Türblatt 10 befestigt, wobei zwischen jedem Griffbügel 9 und der zugeordneten Auflagefläche des Türblattes 10 eine Scheibe 11 angeordnet ist.

In einen der Griffbügel 9, die jeweils aus einem relativ dünnwandigen Rohr bestehen, beispielsweise aus Leichtmetall, ist ein Dübel 1 einseitig eingesteckt, wobei dieser Dübel 1 etwa zylinderförmig ausgebildet ist und eine profilierte Mantelfläche, beispielsweise in Form einer Rändelung oder Riffelung aufweist.

Dabei ist er so eingesetzt, daß er etwa flächenbündig mit der Stirnseite des Griffbügels 9 abschließt.

Weiter weist der Dübel 1 ein zylindrisches Innengewinde 5 auf, in das eine Befestigungsschraube 4 eingedreht ist.

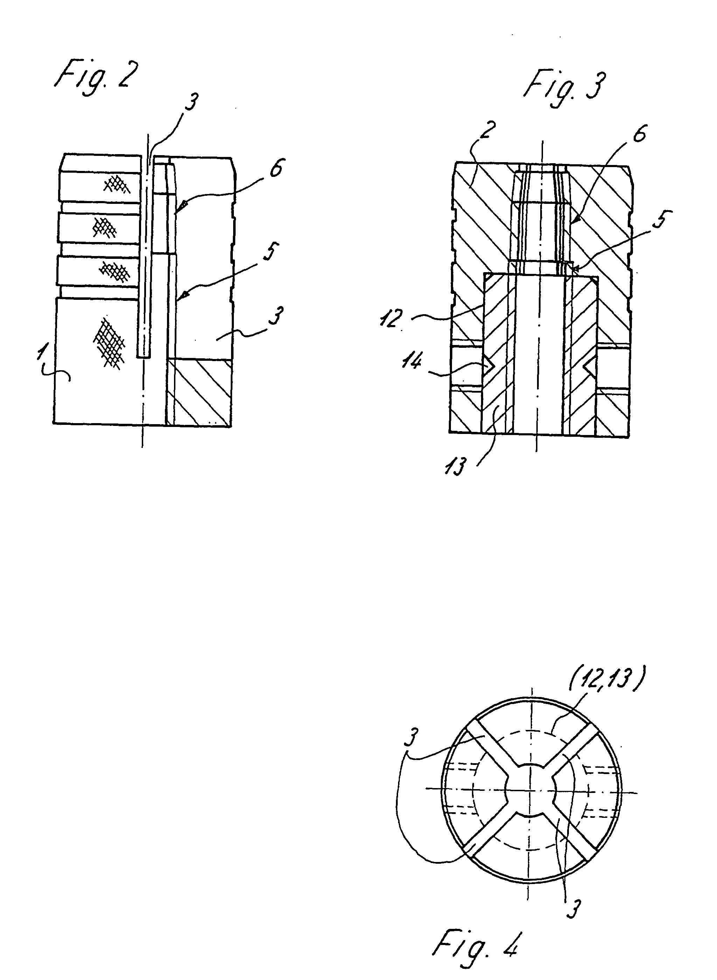

Ausgehend von der der Einsteckseite der Befestigungsschraube 4 gegenüber liegenden Seite sind vier Längsschlitze 3 vorgesehen, die in gleichem Winkel zueinander stehen, wie dies besonders deutlich in der Figur 4 erkennbar ist. Diese Längsschlitze 3 erstrecken sind von der Außenseite des Dübels 1 bis hin zum Innengewinde 5 und bis zur Stirnseite. In ihrer Länge sind die Längsschlitze 3 so bemessen, daß ausreichendes Material verbleibt, um die Befestigungsschraube 4 sicher zu halten.

In dem der Einschraubseite für die Befestigungsschraube 4 gegenüber liegenden Endbereich des Innengewindes 5, der auch als ein der Einsteckseite des Dübels 1 in den Griffbügel 9 zugewandter Bereich 6 bezeichnet werden kann, ist eine Spreizschraube 7 eingedreht, deren Gewindedurchmesser größer ist als der Gewindedurchmesser, d. h. der Nenndurchmesser des Bereiches 6, der sich an das Innengewinde 5 im übrigen anschließt. Die Spreizschraube 7 ist dabei vorzugsweise als Madenschraube ausgebildet, die in ihrer Länge kürzer ist als die Gesamtlänge des Innengewindes 5 und innerhalb des durch die Längsschlitze 3 bestimmten Bereiches liegt. Das heißt, der Bereich 6 mit kleinerem Gewindedurchmesser als die Spreizschraube 7 erstreckt sich maximal bis zum Ende der Längsschlitze 3, so daß eine einwandfreie und wirkungsvolle Spreizung des Dübels gewährleistet ist.

Sowohl hinsichtlich des gewindereduzierten Bereiches 6 als auch bezüglich der Ausbildung der Längsschlitze 3 ist der gegenüber liegende Dübel 2, mit dem der andere Griffbügel 9 angeschlossen ist, gleich ausgebildet.

Hier ist allerdings von der offenen Seite des Griffbügels 9 her in dem Dübel 2 eine Aufnahme 12 vorgesehen, die prinzipiell durch das teilweise Aufbohren des Innengewindes 5 im Dübel 1 hergestellt ist und in die ein Verbindungsstück 13 eingesetzt ist.

Dieses weist ebenfalls ein Innengewinde auf, das auf die Befestigungsschraube 4 aufgeschraubt ist und durch Anziehen fest gegen die zugeordnete Scheibe 11, unter gleichzeitigem Anziehen des gegenüber liegenden Griffbügels 9 gepreßt ist.

Anschließend wird das zweite Griffstück 9, in dem der Dübel 2 in der beschriebenen Art und Weise, also durch Wirkung der Spreizschraube 7 und des im Gewindedurchmesser kleineren Bereiches 6 festgesetzt ist, auf das Verbindungsstück 13 aufgesetzt, das umlaufend eine Ringnut 14 aufweist.

In diese sind Sicherungsschrauben 15 einsetzbar, die durch die Wandung des Griffbügels 9 und des Dübels 2 geführt sind, so daß beide Griffbügel 9 nun fest miteinander verbunden sind.

Zur Erreichung einer besonders starken Spreizung ist der Bereich 6 mit kleinerem Gewindedurchmesser aus seiner der zugeordneten Stirnseite des Dübels 1, 2 zugewandten Seite konisch verengt, so daß im Bedarfsfall bei weiterem Eindrehen der Spreizschraube 7 eine stärkere Spreizung erfolgt, wobei das Gewinde sowohl dieses Teiles als auch des übrigen Bereiches 6 in seiner Steigung der Steigung des Gewindes der Spreizschraube 7 entspricht.

Um ein leichtes Eindrehen der Spreizschraube 7 in den Bereich 6 zu ermöglichen, ist am Grund der Aufnahme 12 ein geringer Teil des Innengewindes 5 vorgesehen, in das die Spreizschraube 7 mit gleichem Gewindedurchmesser zunächst eingedreht und im weiteren Verlauf in den Bereich 6 mit geringerem Durchmesser geführt wird.

Die zuvor beschriebenen Ausführungen sind besonders deutlich in den Figuren 2 und 3 erkennbar, wobei die Figur 2 den Dübel 1 und die Figur 3 den Dübel 2 darstellt, letzteren mit eingesetztem Verbindungsstück 13.

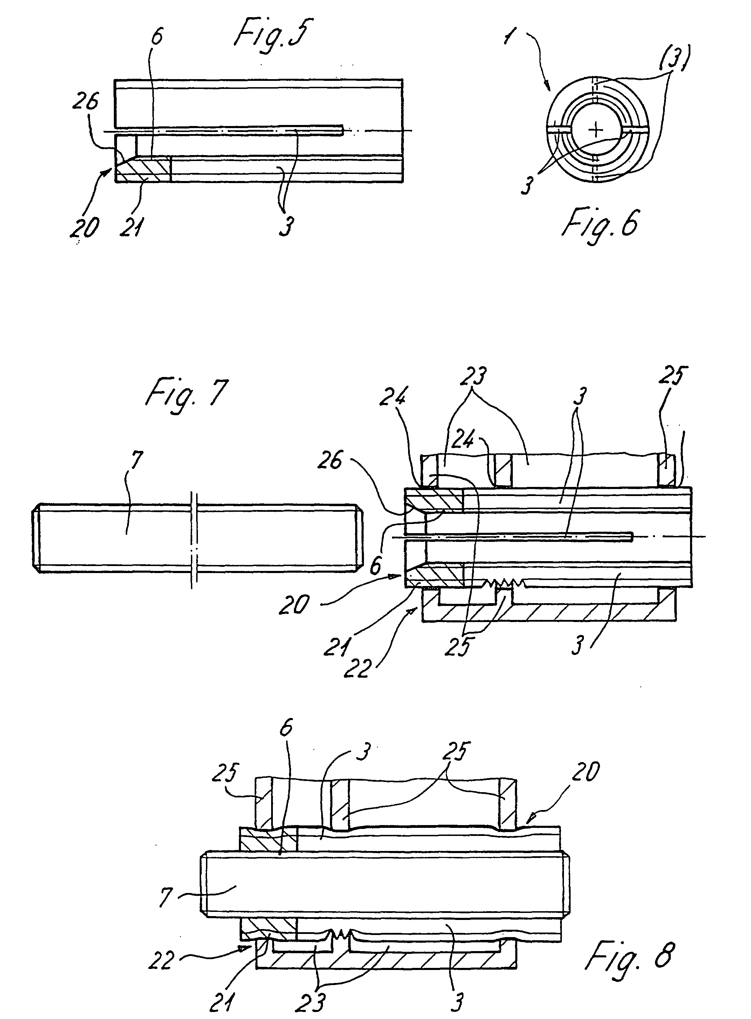

In den Figuren 5 bis 8 ist ein aus Metall hergestellter Dübel 20, insbesondere für einen Tür- oder Fensterbeschlag dargestellt, in den die eindrehbare Spreizschraube 7 eindrehbar ist.

Der als zylindrische Hülse ausgebildete Dübel 20 weist von jedem Ende ausgehend jeweils zwei, sich gegenüber liegende Längsschlitze 3 auf, die sich bis in den gegenüber liegenden Endbereich hinein erstrecken. Dabei sind die von den sich gegenüber liegenden Endseiten ausgehenden Längsschlitze 3 versetzt zueinander angeordnet, vorzugsweise um 90° (Figur 2).

Dadurch, daß der Dübel 20 von beiden Endseiten her geschlitzt ist, erfolgt gleich zu Beginn des Eindrehens der Spreizschraube 7 eine Aufspreizung, so daß beim weiteren Eindrehen der Spreizschraube 7 ein Mitdrehen des Dübels 20 verhindert wird.

Der Dübel 20 weist einen Bereich 6 auf, dessen Durchmesser im wesentlichen über die gesamte Länge gleichbleibend kleiner ist als der Durchmesser der einzudrehenden Spreizschraube 7, und zwar bei gleicher Steigung.

Bei einer Spreizschraube mit einem Gewindedurchmesser von beispielsweise 8 mm tritt eine optimale Spreizung des Dübels 20 dann ein, wenn der Durchmesser des Innengewindes etwa 7 mm beträgt. Dieses Verhältnis ist auch bei anderen Gewindedurchmessern besonders vorteilhaft.

Lediglich in einem Einsteckbereich 26 entspricht der Durchmesser des Innengewindes dem Gewindedurchmesser der Spreizschraube 7, damit diese beim Eindrehen sofort greift, wofür ein oder zwei Gewindegänge ausreichend sind.

Grundsätzlich können beide Enden des Dübels 20 mit einem solchen Einsteckbereich 26 versehen sein, was insofern vorteilhaft ist, als dann der Dübel 20 praktisch von jeder Seite her eingesetzt werden kann.

Denkbar ist aber auch, das einem Einsteckbereich 26 gegenüber liegende Ende zu verengen, so daß beim Durchschrauben der Spreizschraube 7 über das Ende des Dübels 1 hinaus eine sehr starke Spreizung dieses Endbereiches erfolgt, der eine zusätzliche axiale Sicherung bildet.
Stattdessen kann dieses Ende aber auch glattschaftig ausgebildet sein, wobei der Durchmesser dem Kerndurchmesser der Spreizschraube 7 entspricht.

Die Spreizschraube 7 kann die Funktion der Befestigungsschraube 4 wahrnehmen, wenn sie ausreichend weit über den Dübel 20 hinausragt.

In den Figuren 7 und 8 ist der Einsatz eines Dübels 20 in einem Hohlkammerprofil 22 dargestellt. Dieses Hohlkammerprofil 22 weist mehrere Hohlkammern 23 auf, die durch parallel und mit Abstand zueinander verlaufende Wandungen 25 begrenzt sind.

In diesen sind Durchsteckbohrungen 24 vorgesehen, in die der Dübel 20 eingesteckt ist, wobei er so bemessen ist, daß er beidseitig über die letzten Wandungen 25 hinausragt.

Durch Eindrehen der Spreizschraube 7 wird aufgrund des geringeren Durchmessers des Bereiches 6 der Dübel 20 so gespreizt, daß er sowohl an die Leitung der Durchsteckbohrungen 24 angepreßt wird als auch in die Hohlkammern 23 ragend verformt wird.

Im diesem Ausführungsbeispiel ist der Dübel 20 über die gesamte Länge mit einem Außengewinde 21 versehen, das sich durch den Spreizdruck in die Laibung der Durchsteckbohrungen 24 drückt und so einen Formschluß zwischen dem Dübel 20 und dem Hohlkammerprofil 22 herstellt, so daß im Zusammenspiel mit der Deformierung des Dübels 20 in den übrigen Bereichen eine absolut feste Verbindung gegen Herausziehen hergestellt wird, die auch größten Belastungen standhält.

Anstelle eines Außengewindes sind auch andere Profilierungen der Mantelseite des Dübels 20 vorstellbar, beispielsweise Riffelungen, Rändelungen oder dergleichen.

Zur Kennzeichnung des Einsteckbereiches 26, in dem Fall, daß lediglich einer vorgesehen ist, kann außenseitig am Dübel 20 eine Markierung vorgesehen sein, beispielsweise in Form einer Profilierung, wie einer Rändelung o.dgl.

### Bezugszeichenliste

- 1: Dübel
- 2: Dübel
- 3: Längsschlitz
- 4: Befestigungsschraube
- 5: Innengewinde
- 6: Bereich
- 7: Spreizschraube
- 8: Endbereich
- 9: Griffbügel
- 10: Türblatt
- 11: Scheibe
- 12: Aufnahme
- 13: Verbindungsstück
- 14: Ringnut
- 15: Sicherungsschraube
- 16: Durchgangsbohrung
- 20: Dübel
- 21: Außengewinde
- 22: Hohlkammerprofil
- 23: Hohlkammer
- 24: Durchsteckbohrung
- 25: Wandung
- 26: Einsteckbereich

## Patentansprüche

1. Dübel mit eindrehbarer Spreizschraube (7), der mindestens einen Längsschlitz (3) aufweist und mit einem Innengewinde (5) versehen ist, in das die Spreizschraube (7) eindrehbar ist, wobei das zylindrische Innengewinde (5) zumindest einen Bereich (6) aufweist, dessen Gewindedurchmesser kleiner ist als der Gewindedurchmesser der Spreizschraube (7), bei gleicher Gewindesteigung, **dadurch gekennzeichnet, daß** in diesem Bereich (6) der Gewindedurchmesser des Innengewindes (5) gleichbleibend ist.

2. Dübel nach Anspruch 1, **dadurch gekennzeichnet, daß** die Spreizschraube (7) kürzer ist als die Gesamtlänge des Innengewindes (5).

3. Dübel nach Anspruch 1, **dadurch gekennzeichnet, daß** der Nenndurchmesser der Spreizschraube (7) dem Nenndurchmesser des Innengewindes (5) außerhalb des Bereiches (6) entspricht.

4. Dübel nach Anspruch 1, **dadurch gekennzeichnet, daß** sich der Bereich (6) zur zugeordneten Stirnseite des Dübels (1, 2, 20) hin verjüngt.

5. Dübel nach Anspruch 1, **dadurch gekennzeichnet, daß** dieser eine Aufnahme (12) aufweist, die sich axial über den größten Teil des Innengewindes (5), außerhalb des Bereiches (6), erstreckt.

6. Dübel nach Anspruch 5, **dadurch gekennzeichnet, daß** mindestens eine sich radial von außen bis in die Aufnahme (12) erstreckende Gewindebohrung vorgesehen ist, in die eine Sicherungsschraube (15) eindrehbar ist, die mit einem in die Aufnahme (12) eingesteckten Verbindungsstück (13) korrespondiert.

7. Dübel nach Anspruch 5, **dadurch gekennzeichnet, daß** in das Verbindungsstück (13) eine Befestigungsschraube (4) eindrehbar ist, deren Gewindedurchmesser dem des Innengewindes (5) entspricht.

8. Dübel nach Anspruch 1, **dadurch gekennzeichnet, daß** sich der Bereich (6) im wesentlichen über die gesamte Länge des Dübels (20) erstreckt.

9. Dübel nach Anspruch 8, **dadurch gekennzeichnet, daß** von beiden Enden des Dübels (20) her sich jeweils mindestens ein Längsschlitz (2) erstreckt, die versetzt zueinander angeordnet sind und sich teilweise überlappen.

10. Dübel nach Anspruch 9, **dadurch gekennzeichnet, daß** an jeder Seite des Dübels (20) zwei Längsschlitze (2) vorgesehen sind.

11. Dübel nach Anspruch 10, **dadurch gekennzeichnet, daß** die Längsschlitze (2) jeder Seite sich direkt gegenüber liegen.

12. Dübel nach Anspruch 10 oder 11, **dadurch gekennzeichnet, daß** die Schlitze (2) gleichmäßig zueinander versetzt angeordnet sind.

13. Dübel nach Anspruch 8, **dadurch gekennzeichnet, daß** ein endseitiger Einsteckbereich (26) des Bereiches (6) einen Gewindedurchmesser aufweist, der dem der Spreizschraube (7) entspricht.

14. Dübel nach Anspruch 13, **dadurch gekennzeichnet, daß** an beiden Endseiten des Dübels (20) jeweils ein Einsteckbereich (26) vorgesehen ist.

15. Dübel nach Anspruch 13, **dadurch gekennzeichnet, daß** das einem Einsteckbereich (26) gegenüber liegende Ende innenseitig eine sich nach außen erstreckende Verjüngung aufweist.

16. Dübel nach Anspruch 13, **dadurch gekennzeichnet, daß** das einem Einsteckbereich (26) gegenüber liegende Ende innenseitig glattschaftig ausgebildet ist und einen Durchmesser aufweist, der dem Kerndurchmesser des Innengewindes entspricht.

17. Dübel nach Anspruch 13 oder 14, **dadurch gekennzeichnet, daß** die dem Einsteckbereich (26) zugeordnete Außenseite des Dübels (1) mit einer Markierung in Form einer Profilierung versehen ist.

18. Dübel nach Anspruch 1, **dadurch gekennzeichnet, daß** die Außenseite des Dübels (1, 2, 20) im wesentlichen mit einem Außengewinde (5) versehen ist.

## Claims

1. Plug having an expansion screw (7) which can be screwed into place, said plug having at least one longitudinal slot (3) and being provided with an internal thread (5) into which the expansion screw (7) can be screwed, the cylindrical internal thread (5) having at least one region (6) whose thread diameter is smaller than the thread diameter of the expansion screw (7) at the same thread pitch, **characterized in that** the thread diameter of the internal thread (5) is uniform in this region (6).

2. Plug according to Claim 1, **characterized in that** the expansion screw (7) is shorter than the total length of the internal thread (5).

3. Plug according to Claim 1, **characterized in that** the nominal diameter of the expansion screw (7) corresponds to the nominal diameter of the internal thread (5) outside the region (6).

4. Plug according to Claim 1, **characterized in that** the region (6) tapers towards the associated end face of the plug (1, 2, 20).

5. Plug according to Claim 1, **characterized in that** it has a receptacle (12) which extends axially over most of the internal thread (5), outside the region (6).

6. Plug according to Claim 5, **characterized in that** at least one tapped hole is provided which extends radially from outside right into the receptacle (12) and into which a locking screw (15) can be screwed which corresponds with a connecting piece (13) inserted into the receptacle (12).

7. Plug according to Claim 5, **characterized in that** a fastening screw (4) whose thread diameter corresponds to that of the internal thread (5) can be screwed into the connecting piece (13).

8. Plug according to Claim 1, **characterized in that** the region (6) extends essentially over the entire length of the plug (20).

9. Plug according to Claim 8, **characterized in that** in each case at least one longitudinal slot (3) extends from both ends of the plug (20), these longitudinal slots (3) being arranged offset from one another and partly overlapping.

10. Plug according to Claim 9, **characterized in that** two longitudinal slots (3) are provided on each side of the plug (20).

11. Plug according to Claim 10, **characterized in that** the longitudinal slots (3) of each side lie directly opposite one another.

12. Plug according to Claim 10 or 11, **characterized in that** the slots (3) are arranged uniformly offset from one another.

13. Plug according to Claim 8, **characterized in that** an end insertion region (26) of the region (6) has a thread diameter which corresponds to that of the expansion screw (7).

14. Plug according to Claim 13, **characterized in that** in each case an insertion region (26) is provided on both end sides of the plug (20).

15. Plug according to Claim 13, **characterized in that**, on the inside, the end opposite an insertion region (26) has a taper extending outwards.

16. Plug according to Claim 13, **characterized in that** the end opposite an insertion region (26) is designed in a smooth-shank-like manner on the inside and has a diameter which corresponds to the core diameter of the internal thread.

17. Plug according to Claim 13 or 14, **characterized in that** the outside of the plug (20) assigned to the insertion region (26) is provided with a marking in the form of profiling.

18. Plug according to Claim 1, **characterized in that** the outside of the plug (1, 2, 20) is essentially provided with an external thread (21).

## Revendications

1. Cheville avec vis d'expansion (7) pouvant être serrée qui comporte au moins une fente longitudinale (3) et est munie d'un filet intérieur (5) dans lequel la vis d'expansion (7) peut être serrée, sachant que le filet intérieur cylindrique (5) comprend au moins une zone (6) dont le diamètre de filet est inférieur au diamètre de filet de la vis d'expansion (7), pour un même pas de vis, **caractérisée en ce que** le diamètre du filet intérieur (5) est constant dans cette zone (6).

2. Cheville selon la revendication 1, **caractérisée en ce que** la vis d'expansion (7) est plus courte que la longueur totale du filet intérieur (5).

3. Cheville selon la revendication 1, **caractérisée en ce que** le diamètre nominal de la vis d'expansion (7) correspond au diamètre nominal du filet intérieur (5) au-delà de la zone (6).

4. Cheville selon la revendication 1, **caractérisée en ce que** la zone (6) s'effile en direction de la face frontale associée de la cheville (1, 2, 20).

5. Cheville selon la revendication 1, **caractérisée en ce que** celle-ci comprend un logement (12) qui s'étend de manière axiale sur la majeure partie du filet intérieur (5), au-delà de la zone (6).

6. Cheville selon la revendication 5, **caractérisée en ce qu'**on a prévu au moins un trou taraudé, s'étendant de manière radiale de l'extérieur jusque dans le logement (12), dans lequel une vis de blocage (15) peut être serrée, laquelle vis correspond avec un raccord (13) introduit dans le logement (12).

7. Cheville selon la revendication 5, **caractérisée en ce qu'**il est possible de serrer dans le raccord (13) une vis de blocage (4) dont le diamètre de filet correspond à celui du filet intérieur (5).

8. Cheville selon la revendication 1, **caractérisée en ce que** la zone (6) s'étend pour l'essentiel sur la longueur totale de la cheville (20).

9. Cheville selon la revendication 8, **caractérisée en ce qu'**à partir des deux extrémités de la cheville (20), s'étend respectivement au moins une fente longitudinale (2), fentes qui sont disposées de manière décalée les unes par rapport aux autres et se chevauchent en partie.

10. Cheville selon la revendication 9, **caractérisée en ce que** deux fentes longitudinales (2) sont prévues sur chaque côté de la cheville (20).

11. Cheville selon la revendication 10, **caractérisée en ce que** les fentes longitudinales (2) de chaque côté se font directement face.

12. Cheville selon la revendication 10 ou 11, **caractérisée en ce que** les fentes (2) sont disposées suivant un décalage régulier les unes par rapport aux autres.

13. Cheville selon la revendication 8, **caractérisée en ce qu'**une zone d'introduction terminale (26) de la zone (6) présente un diamètre de filet qui correspond à celui de la vis d'expansion (7).

14. Cheville selon la revendication 13, **caractérisée en ce qu'**une zone d'introduction (26) respectivement est prévue sur les côtés terminaux de la cheville (20).

15. Cheville selon la revendication 13, **caractérisée en ce que** l'extrémité faisant face à une zone d'introduction (26) comporte, du côté intérieur, un effilement s'étendant vers l'extérieur.

16. Cheville selon la revendication 13, **caractérisée en ce que** l'extrémité faisant face à une zone d'introduction (26) est réalisée avec un corps lisse du côté intérieur et présente un diamètre qui correspond au diamètre à fond de filet du filet intérieur.

17. Cheville selon la revendication 13 ou 14, **caractérisée en ce que** le côté extérieur de la cheville (1), associé à la zone d'introduction (26), est muni d'un marquage sous forme de sculpture.

18. Cheville selon la revendication 1, **caractérisée en ce que** le côté extérieur de la cheville (1, 2, 20) est muni pour l'essentiel d'un filet extérieur (5).
